# EUROPEAN PATENT SPECIFICATION

(11) **EP 4 520 698 B1**
(45) Date of publication and mention of the grant of the patent: **27.05.2026**
(21) Application number: 24197538.2
(22) Date of filing: 30.08.2024
(51) Int. Cl.: B65H 49/08, B21F 1/02, B23K 9/133, B65H 51/14, B65H 57/18, B21C 47/18

(54) **STORAGE AND FEEDING ASSEMBLY FOR A WELDING WIRE FOR A WELDING OR BRAZING PLANT**
VORRATS- UND ZUFÜHRANORDNUNG FÜR EINEN SCHWEISSDRAHT FÜR EINE SCHWEISS- ODER LÖTANLAGE
ENSEMBLE DE STOCKAGE ET D'ALIMENTATION POUR UN FIL DE SOUDAGE POUR UNE INSTALLATION DE SOUDAGE OU DE BRASAGE

(30) Priority: 08.09.2023 IT 202300018483
(43) Date of publication of application: 12.03.2025
(73) Proprietor: Safra S.p.A., 25039 Travagliato, Brescia (IT)
(72) Inventor: LOMBARDI, Andrea, I-25039 Travagliato, Brescia (IT); SPIESS, Michael, I-25039 Travagliato, Brescia (IT)
(74) Representative: Zanardelli, Davide

(56) References cited:
- WO-A1-2018/167806
- WO-A1-88/10230
- JP-A- 2003 025 068
- JP-U- S 598 965
- JP-U- S5 933 862
- JP-U- S57 193 682
- KR-U- 20140 005 881
- KR-Y1- 200 400 806

## Description

The present invention relates to the field of wire welding or brazing plants and relates in particular to a storage and feeding assembly for a welding wire for welding or brazing plants.

The present invention may however be used for any type of wire that needs to be stored in a drum and supplied to a plant positioned downstream of the assembly.

As is known, some welding or brazing plants use a welding wire stored in a drum. The wire is progressively extracted from the drum and supplied to the welding apparatus, for example a welding torch moved either by a robot or manually.

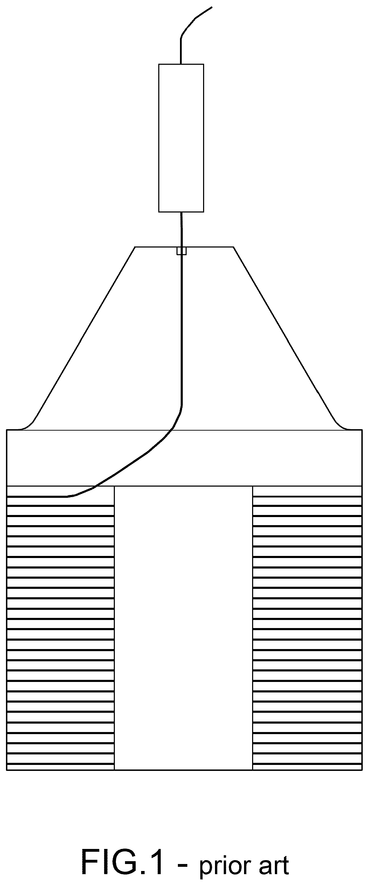

An example of a storage and feeding assembly typical of the prior art is shown in Fig. 1, wherein a welding wire wound in coils is stored in a cylindrical drum closed by a conical lid. Such conical lid, which has a wire outlet passage at the top thereof, also has the function of guiding the wire towards the outlet passage in such a way as to limit the formation of kinks. The wire is pulled out of the drum and supplied to the welding apparatus by a wire handling device. In some embodiments, for example of the type described in WO2018167806A1, in the name of the same Applicant, the wire handling device also has the task of eliminating, or at least reducing, the tendency of the wire to twist due to the prolonged storage thereof in the form of coils in the drum. Further embodiments of the storage and feeding assembly according to the state of the art are disclosed in KR20140005881U and JPS57193682U.

The storage and feeding assembly is usually located within an industrial environment and therefore the wire handling device, which must be accessible to resolve any malfunctions and for its maintenance, is therefore exposed to dust, dirt or other external agents which may be the cause of such malfunctions or which in any case may accelerate the wear thereof. Furthermore, the wire handling device may be subject to voluntary or involuntary tampering by the operators.

The object of the present invention is to propose a storage and feeding assembly for a wire, wound in coils in a drum, which allows for maintenance interventions on the wire handling device to be reduced.

Said object is achieved with a storage and feeding assembly according to claim 1. The dependent claims describe preferred embodiments of the invention.

The features and advantages of the storage and feeding assembly according to the invention shall be made apparent from the following description of preferred exemplary embodiments thereof, provided by way of nonlimiting examples, with reference to the accompanying figures, wherein:
- Fig. 1 shows a storage and feeding assembly according to a typical embodiment of the prior art;
- Fig. 2 is a perspective view of a storage and feeding assembly according to the invention in a first embodiment;
- Fig. 3 is a view from above of the assembly in Fig. 2;
- Fig. 4 is a view from above of separate parts and a partial section of the storage and feeding assembly shown in Fig. 2;
- Fig. 5 is a perspective view of a storage and feeding assembly according to the invention in a second embodiment;
- Fig. 6 is a view from above of the assembly in Fig. 5;
- Fig. 7 is a view from above in separate parts and in partial section of the storage and feeding assembly in Fig. 5;
- Fig. 8 is an enlargement of a portion in section of the assembly in Fig. 7;
- Fig. 9a, 9b, 9c, 9d and 9e show the storage and feeding assembly comprising a wire unwinding accessory in five different embodiments;
- Fig. 10 is a perspective view of a handling device according to an embodiment;
- Fig. 11a and 11b are a front view and a side view of the handling device in Fig. 10 respectively.

In said drawings, the numeral 1 has been used to denote, as a whole, a storage and feeding assembly for a welding wire to be supplied to an apparatus, such as a welding torch, according to the invention. The storage and feeding assembly 1 extends along an assembly axis X-X.

According to the invention, the storage and feeding assembly 1 comprises a drum 2, for example cylindrical in shape or with a polygonal cross section, that is suitable for storing a welding wire 10 wound in coils 10', forming a bundle 12 of wire. In particular, the coils 10' of the wire 10 are maintained in an ordered overlapping relationship that allows the correct extraction of the welding wire 10 from the drum 2.

The drum extends about a drum axis Y-Y between a resting base 21 and an open upper end 23.

Preferably, the assembly axis X-X and the drum axis Y-Y are aligned.

The storage and feeding assembly 1 furthermore comprises a wire handling device 3 that is suitable for extracting the wire from the drum 2 in order to feed it to the welding or brazing apparatus (not shown).

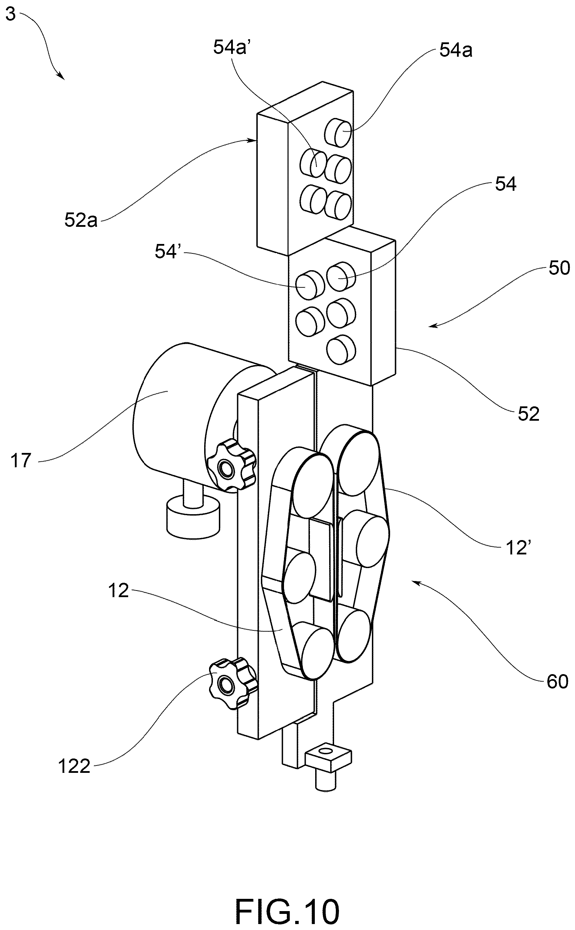

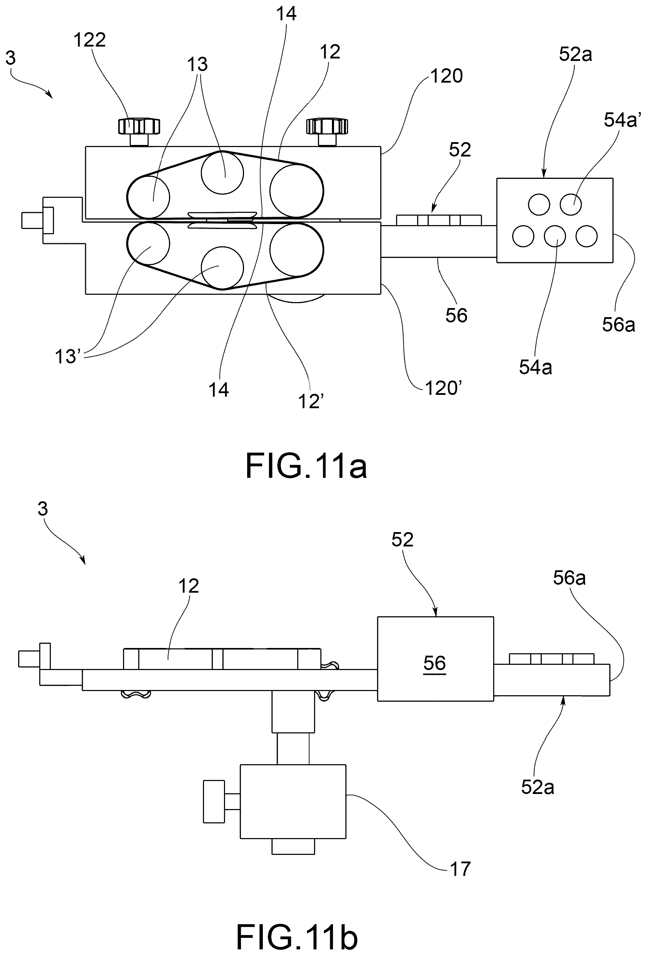

According to the invention (shown in Fig. 10, 11a and 11b), the wire handling device 3 comprises a wire straightening group 50 and a wire pulling group 60.

The wire pulling group 60 comprises two opposing driving belts 12, 12'. The two driving belts form two respective straight belt segments 14 facing each other in such a way as to receive therebetween and to move the wire 10 emerging from the drum 2.

In other words, each driving belt 12; 12' is returned by respective tensile rollers 13; 13' in such a way as to form a closed ring. One of such tensile rollers 13, 13' is a drive roller suitable for generating the rotation of the respective driving belt 12; 12'.

In one embodiment, the drive roller is keyed to a shaft of an actuator 17, for example a pneumatic or electric actuator.

In one embodiment, each driving belt 12; 12' is returned on three tensile rollers 13; 13'.

In one embodiment, the extension of the straight segment 14 is at least equal to the diameter of the tensile rollers 13; 13', i.e., it is on the order of tens or, preferably, hundreds of mm.

In fact, with respect to the driving rollers of the prior art, which, in having precise contact with the welding wire, exert a high specific pressure on said wire, the driving belts 12; 12', having a much larger contact surface with the wire than the rollers, exert a much lower specific pressure.

The welding wire 10 is therefore not deformed by the passage between the driving belts 12; 12', and also any deposit of dust or other external agents upon the belts has no effect on the surface of the wire.

Furthermore, this handling of the wire without deformation or alteration effects on the wire is facilitated by the fact that the driving belts 12; 12' may be made of a softer material than the one with which the driving rollers are usually made.

In one embodiment, the tensile rollers 13; 13' of the two opposite driving belts 12; 12' are supported by respective driving plates 120; 120' that may be mutually spaced apart, for example by means of micrometric screws 122, as a function of the diameter of the welding wire 1.

According to a further embodiment (not shown), the wire pulling group 60 comprises a plurality of motorized wire pulling rollers facing each other in such a way as to receive therebetween and move the wire 10 emerging from the drum 2. Preferably, there are two or four wire pulling rollers.

The straightening group 50, which as mentioned above may be positioned downstream or upstream of the wire pulling group 60, comprises at least two roller rectifier units 52, 52a arranged in series with each other along the advancement direction of the wire.

Each straightening unit 52; 52a comprises at least two opposing straightening rollers 54, 54'; 54a, 54a' between which the welding wire 10 is made to pass, being moved by the wire pulling group 60.

The straightening rollers 54, 54' of one straightening unit 52 are oriented perpendicular to the straightening rollers 54a, 54a' of at least one other straightening unit 52a. However, all of the straightening rollers 54, 54'; 54a, 54a' have the respective rotation axes perpendicular to the advancement direction of the welding wire 10, i.e., perpendicular to the straight segments 14 of the driving belts 12, 12'.

With such an arrangement of the straightening rollers, it has been experimentally verified that the memory of the welding wire 10 emerging from the drum 2 is completely eliminated. The welding wire 10 that emerges from the straightening group 50 is therefore completely neutral.

In one embodiment, the suitably shaped straightening rollers 54, 54'; 54a, 54a' are mounted idly on a respective roller support plate 56, 56a. Therefore, the straightening rollers effectively perform only the function of straightening the welding wire 10. By not exerting any torque on the wire, the wire is straightened, but the cross section thereof is not deformed nor is the surface thereof altered.

According to one embodiment, each roller rectifier unit 52, 52a is provided with at least five straightening rollers 54, 54'; 54a, 54a': at least two first rollers 54; 54a arranged side by side along the advancement direction of the wire, opposite and offset with respect to at least three second rollers 54'; 54a' arranged side by side along the advancement direction of the wire.

In one embodiment, the straightening rollers of each straightening unit are seven in number: three first rollers 54; 54a arranged side by side along the advancement direction of the wire, opposite and offset with respect to four second rollers 54'; 54a' arranged side by side along the advancement direction of the wire.

In one embodiment, also the distance between the first and second straightening rollers 54, 54'; 54a, 54a' may be adjusted as a function of the diameter of the necessary deformation of the welding wire 10.

The storage and feeding assembly 1 comprises a substantially conical lid 5, that is placed above the drum 2 and that comprises an upper lid wall 50 wherein there are obtained an outlet passage 5' of the wire 10 and a lid side wall 55. The upper lid wall 50 and the lid side wall 55 define a lid volume 500.

The lid side wall 55 is at least partially made of a transparent material in such a way as to allow for visual inspection of the handling device 3 through the lid side wall.

According to one embodiment, the lid side wall 55 is made entirely of a transparent material. Preferably, the entire lid 5 is made of a transparent material.

According to one embodiment, the lid 5 is made of a plastics material.

According to one embodiment, the handling device is firmly fastened to the upper lid wall 50 inside the lid volume 500.

According to one embodiment, the handling device 3 comprises a support base 30 suitable for supportingly engaging and being fastened to the upper lid wall 50.

According to a further embodiment, the wire handling device 3 is screwable to the upper lid wall 50.

According to one embodiment, at least one lid opening 55' is obtained in the lid side wall 55 for accessing the lid volume 500. Preferably, such openings 55' may be opened and closed by means of a door 55".

According to one embodiment, the door 55" is made of a transparent material.

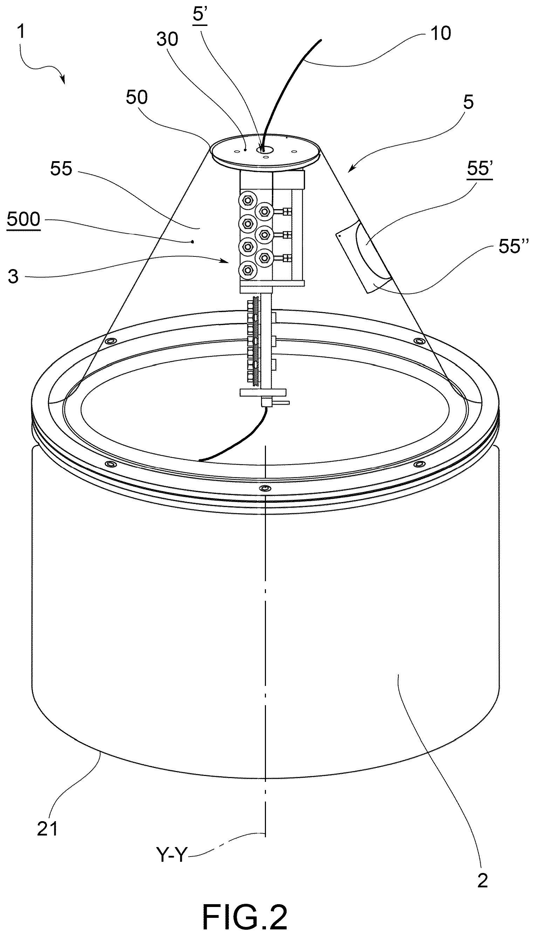

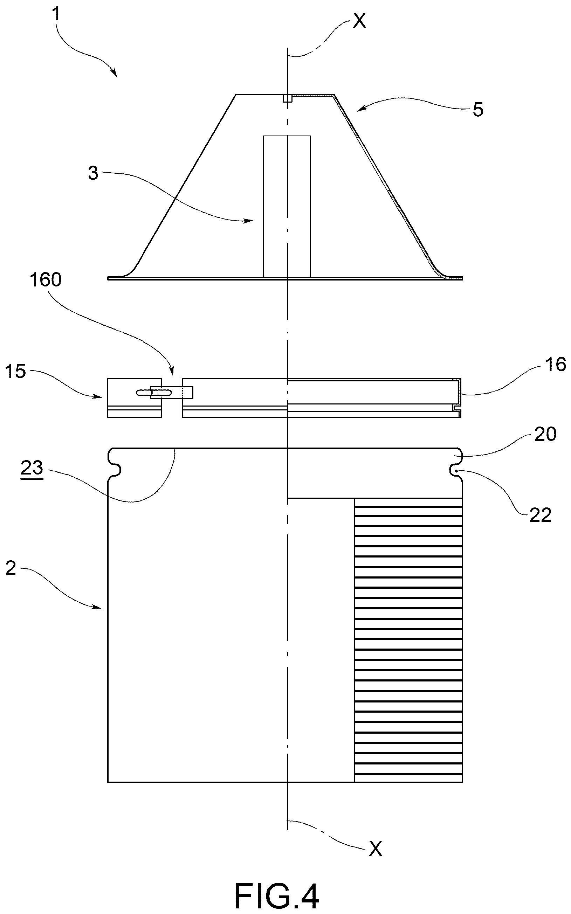

According to a first embodiment (shown in Fig. 2, 3 and 4), the lid 5 is positioned in a releasable manner at the upper end 23 of the drum 2.

According to one embodiment, the storage and feeding assembly 1 comprises fastening means 15 for releasably fastening the lid 5 to the drum 2. Preferably, the fastening means 15 comprise a releasable clamping ring 16 that couples adjacent end portions of the drum 2 and of the side wall 55 of the lid 5. Preferably, the clamping ring 16 has a C-shaped cross section.

According to one embodiment, the clamping ring 16 comprises handling means 160 suitable for configuring the clamping ring 16 from an open configuration to a closed configuration wherein it engages the adjacent end portions of the drum 2 and of the lid side wall 55 in order to fasten them in a stable manner to each other.

According to one embodiment, the upper end 23 of the drum 2 comprises a circumferential drum groove 22 for engagement with the clamping ring 16.

According to one embodiment, the clamping ring 16 is partially inserted into the circumferential drum groove 22.

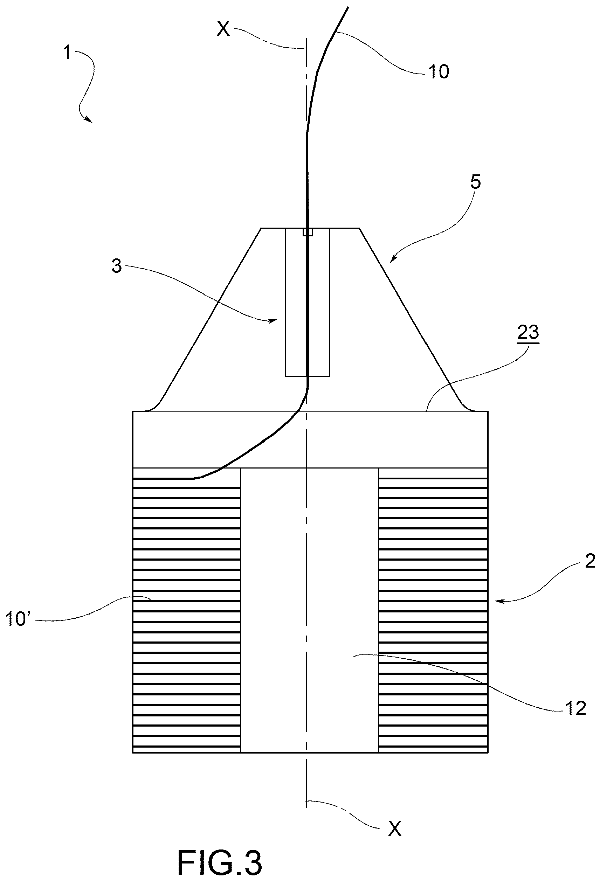

Fig. 3 schematically shows the storage and feeding assembly 1 wherein the welding wire 10 of the upper coil, emerging from the drum outlet opening 2', is engaged by the wire handling device 3 housed within the lid volume 500.

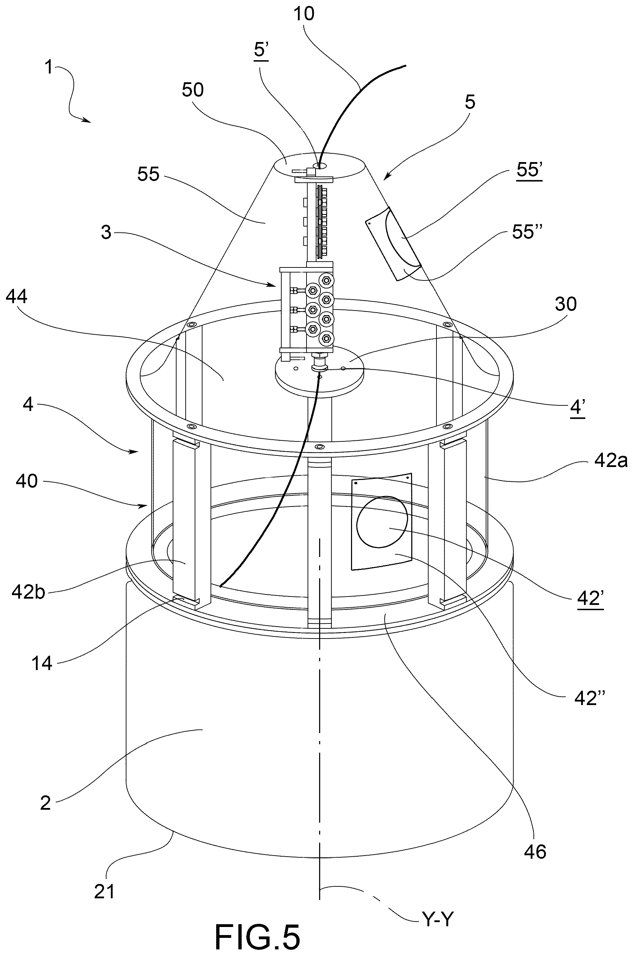

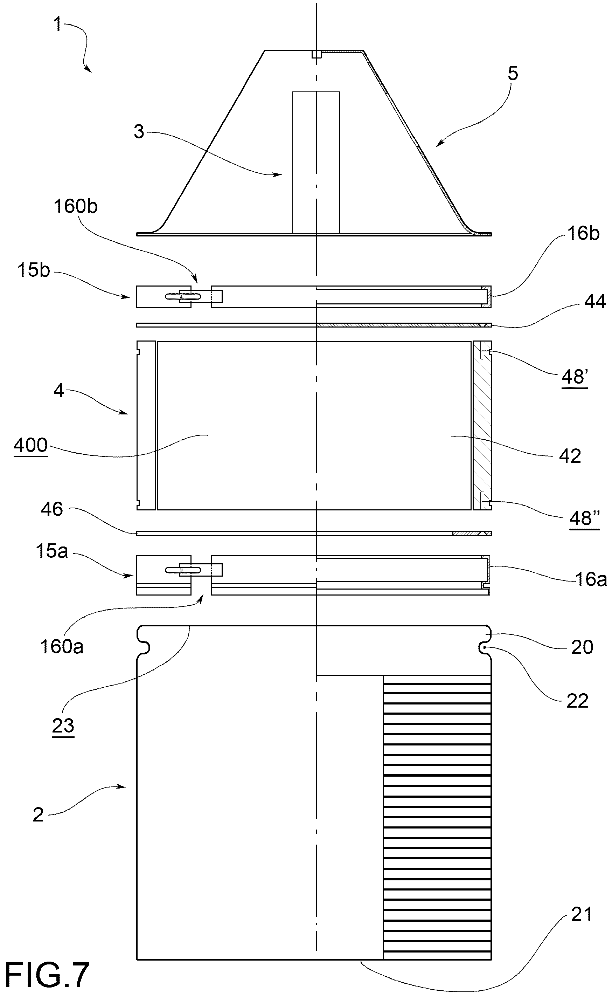

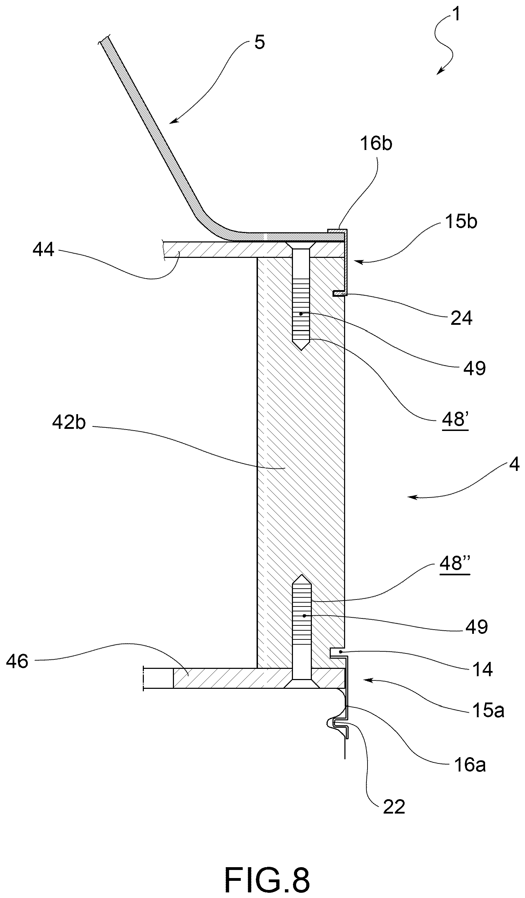

According to a second embodiment (shown in Fig. 5, 6, 7, 8 and 9), the storage and feeding assembly 1 comprises a spacer 4 suitable for being releasably positioned between the upper end 23 of the drum 2 and the lid 5. The spacer 4 comprises a spacer body 40 that defines a spacer housing 400 delimited by an annular side wall 42 in such a way as to act as an extension for the drum 2.

According to one embodiment, the annular side wall 42 is made at least partially from a transparent material in such a way as to allow a visual inspection of the spacer housing 400 through the annular side wall 42.

According to one embodiment, the annular side wall 42 is made entirely of a transparent material. The entire spacer body 40 is preferably made of a transparent material.

According to one preferred embodiment, the spacer body 40 is made of a plastics material.

According to one embodiment, a spacer outlet opening 4' is obtained in the spacer 4 through which the wire 10 originating from the drum 2 emerges.

According to one embodiment, the spacer body 40 further comprises an upper base 44 connected to the annular side wall 42. In other words, the annular side wall 42 and the upper base 44 define the spacer housing 400. The spacer outlet opening 4' is preferably obtained in the upper base 44.

According to one embodiment, the wire handling device 3 is integrally fastened to the upper base 44, in particular externally with respect to the spacer housing 400.

According to one embodiment, the wire handling device 3 is screwable to the spacer 4, preferably to the upper base 44.

According to a further embodiment, the wire handling device 3 comprises a support base 30 that is suitable for supportingly engaging and being fastened to the spacer 4, preferably to the upper base 44.

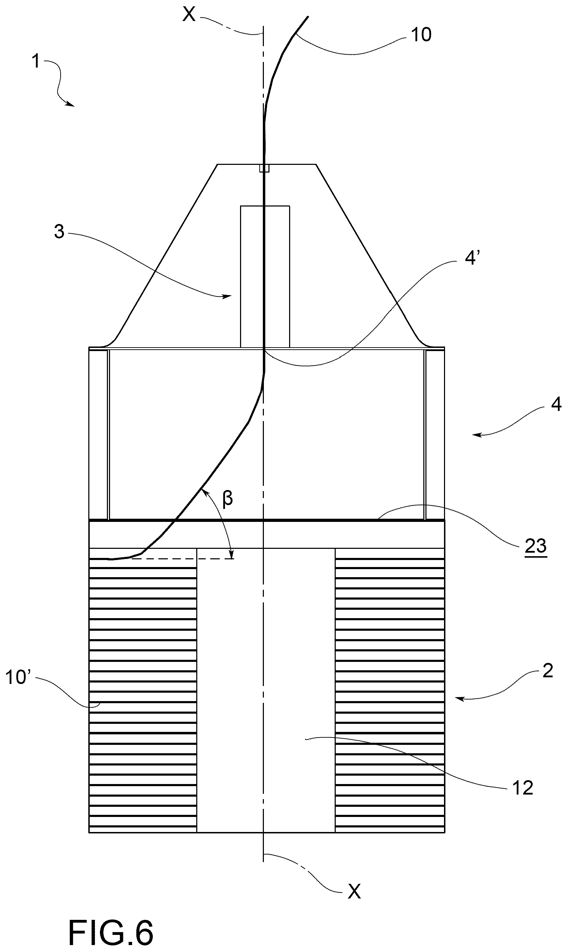

Fig. 6 schematically shows the storage and feeding assembly 1 wherein the welding wire 10 of the upper coil, emerging from the drum outlet opening 2', passes through the spacer housing 400 and exits the spacer outlet opening 4', preferably obtained in the upper base 44, and is engaged by the wire handling device 3.

According to one embodiment, the annular side wall 42 comprises plate-shaped elements 42a and vertical supports 42b interposed therebetween.

According to one embodiment, in the annular side wall 42, preferably in the plate-shaped elements 42a, spacer openings 42' are obtained for accessing the spacer housing 400 when the spacer 4 engages the drum 2. Preferably, such openings 42' may be opened and closed by means of a door 42".

According to one embodiment, the door 42" is made of a transparent material.

According to one embodiment, the annular side wall 42 has an adjustable axial extension. "Axial extension" means along the assembly axis X-X. Preferably, the annular side wall 42 is adjustable; for example, it is a telescopic wall.

According to one embodiment, the spacer body 40 comprises a lower flange 46 for engagement with the drum 2. In particular, the lower flange 46 rests against an upper edge 20 of the drum 2.

According to one embodiment, the annular side wall 42, preferably the vertical supports 42b, comprises upper longitudinal holes 48' and lower longitudinal holes 48" for engagement, by means of screws 49, with the upper base 44 and the lower flange 46 respectively. In other words, there is a mutual mechanical engagement between the annular side wall 42 and the upper base 44, and between the annular side wall 42 and the lower flange 46.

According to one embodiment, the storage and feeding assembly 1 comprises first coupling means 15a for releasably coupling the spacer 4 to the drum 2. Preferably, the first coupling means 15a comprise a first releasable clamping ring 16a that couples adjacent end portions of the drum 2 and of the annular side wall 42. Preferably, the first clamping ring 16a has a C-shaped cross section.

According to one embodiment, the first clamping ring 16a comprises first handling means 160a suitable for configuring the first clamping ring 16a from an open configuration to a closed configuration wherein it engages the adjacent end portions of the drum 2 and of the annular side wall 42 in order to fasten them in a stable manner to each other.

According to one embodiment, a lower end portion of the annular side wall 42 comprises a lower circumferential groove 14 for engagement with the first clamping ring 16a. Preferably, the lower circumferential groove 14 is obtained only at the vertical supports 42b.

According to one embodiment, the first clamping ring 16a is partially inserted into the lower circumferential groove 14 of the annular side wall 42, and into the circumferential drum groove 22 of the drum 2.

According to one embodiment, the storage and feeding assembly 1 comprises second coupling means 15b for coupling the lid 5 to the spacer 4. Preferably, the second coupling means 15b comprise a second releasable clamping ring 16b that couples adjacent end portions of the annular side wall 42 and the lid 5. Preferably, the second clamping ring 16b has a C-shaped cross section.

According to one embodiment, the second clamping ring 16b comprises second handling means 160b that are suitable for configuring the second clamping ring 16b from an open configuration to a closed configuration wherein it engages the adjacent end portions of the annular side wall 42 and of the lid 5 in order to fasten them in a stable manner to each other.

According to one embodiment, an upper end portion of the ring body 40 comprises an upper circumferential groove 24 for engagement with the second clamping ring 16b. Preferably, the upper circumferential groove 24 is obtained only at the vertical supports 42b.

According to one embodiment, the second clamping ring 16b engages the annular side wall 42, preferably the vertical supports 42b and the lid 5, preferably the lid side wall 55.

According to one embodiment, the second clamping ring 16b is partially inserted into the upper circumferential groove 24 of the annular side wall 42.

According to one embodiment, the storage and feeding assembly 1 comprises at least one wire end sensor, which may be positioned, with respect to the wire feed direction, downstream and/or upstream of the wire handling device 3.

In particular, in the embodiment wherein the wire handling device 3 comprises the straightening group and the wire pulling group, the at least one wire end sensor may be positioned between the straightening group and the wire pulling group, or before and/or after each of the straightening group and the wire pulling group.

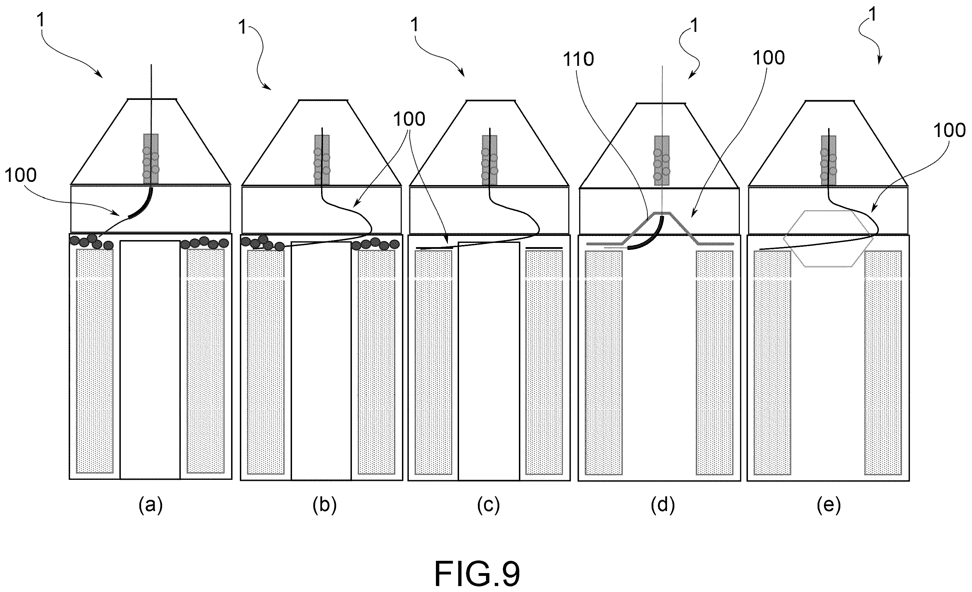

According to one embodiment (shown schematically in Fig. 9a, 9b, 9c, 9d and 9e), the storage and feeding assembly 1 comprises at least one wire unwinding accessory 100 positioned at least partially in the spacer housing 400.

For example, the accessory 100 is a wire guide device 110 (Fig. 9d), also known in the jargon as a "pay-off system," which allows the welding wire 10 to exit the drum 2 correctly. Such wire guide device generally has a conical shape and comprises a base that rests above the coils 10' of the wire and a rotating tubular element which guides the wire of the upper coil towards the drum outlet opening 2'.

According to one embodiment, the ratio between a longitudinal dimension of the drum 2 and a longitudinal dimension of the bundle 12 is between 70% and 100%, preferably 85%.

The term "longitudinal dimension" refers to the dimension along the drum axis Y-Y.

In the present invention, the use of the lid, into which the wire handling device is inserted, makes it possible to protect said wire handling device while also preventing the operator from being exposed to accidental injury, such as injury caused by electric shock due to unwanted voltage losses.

Furthermore, insofar as the lid side wall is at least partially made of a transparent material, an operator is able to control the proper operation of the handling device through the lid side wall without the need to disassemble it.

Furthermore, the openings made in the lid mean that such wire handling device is accessible only to specialized personnel thereby avoiding tampering and/or accidental injury of the operators.

Fig. 1 schematically shows the storage and feeding assembly typical of the prior art, wherein the lid is directly engaged with the drum, and the wire handling device is external to the lid. In particular, the welding wire originating from the upper coil, towards the wire handling device, forms an angle α with a transverse axis with respect to the assembly axis.

Fig. 6 shows, on the other hand, the storage and feeding assembly 1 of the present invention which comprises the spacer 4, placed between the drum 2 and the lid 5, and wherein the wire handling device 3 is preferably inserted inside the lid 5. In particular, the welding wire 10 originating from the upper coil towards the wire handling device 3 forms an angle β with a transverse axis with respect to the assembly axis X-X. Such angle β is greater than the angle α, thus in the storage and feeding assembly of the present invention, the wire has a lower possibility of tangling and deformation than the wire of the storage and feeding assembly of the prior art.

In other words, using the spacer allows a greater angle of exit of the wire from the drum, thus decreasing the tangling and deformation of the wire.

The upper base of the spacer, to which the wire handling device may be fastened, prevents debris, such as dust, from entering the drum thereby damaging the stored wire.

A person skilled in the art may make changes or replacements of elements with other functionally equivalent ones in the embodiments of the storage and feeding assembly in order to meet specific needs within the scope of protection as defined by the following claims.

## Claims

1. A storage and feeding assembly (1) for a wire (10) to be fed to an apparatus, for example a welding wire to be fed to a welding torch, comprising:
- a drum (2) suitable for storing a wire (10) wound in coils (10'), the drum (2) extending about a drum axis (Y-Y) between a resting base (21) and an open upper end (23);
- a wire handling device (3) suitable for extracting the wire (10) from the drum (2) to feed it to the apparatus;
- a lid (5) placed above the drum (2) comprising an upper lid wall (50) in which an outlet passage (5') for the wire (10) is obtained and a lid side wall (55), wherein said upper lid wall (50) and said lid side wall (55) define a lid volume (500),
wherein the handling device (3) extends in the lid volume (500) substantially coaxially to the drum axis (Y-Y), and wherein the lid side wall (55) is made at least partially of a transparent material so as to allow a visual inspection of the handling device (3) through said lid side wall (55),
wherein the wire handling device (3) comprises a rectifier group (50) and a wire pulling group (60),
wherein the rectifier group (50) comprises at least two roller rectifier units (52, 52a) placed in series with each other along the feeding direction of the wire (10), and
wherein the wire pulling group (60) comprises either two opposed driving belts (12, 12') forming two respective straight belt segments (14) facing each other so as to receive and move the wire (10) exiting from the drum (2) therebetween, or a plurality of motorized wire pulling rollers facing one another so as to receive and move the wire (10) exiting from the drum (2) therebetween.

2. Storage and feeding assembly (1) according to claim 1, wherein the handling device (3) is firmly fastened to the upper lid wall (50) inside the lid volume (500).

3. Storage and feeding assembly (1) according to claim 1 or 2, wherein the wire handling device (3) comprises a support base (30) suitable for supportingly engaging and being fastened to the upper lid wall (50).

4. Storage and feeding assembly (1) according to any one of the preceding claims, wherein at least one lid opening (55') is obtained in the lid side wall (55) to access the lid volume (500).

5. Storage and feeding assembly (1) according to any one of the preceding claims, wherein the lid (5) is releasably positioned at the upper end (23) of the drum (2).

6. Storage and feeding assembly (1) according to claim 5, comprising first coupling means (15) for releasably fastening the lid (5) to the drum (2), wherein said first coupling means (15) comprise a first releasable clamping ring (16) which couples adjacent end portions of the drum (2) and the side wall (55).

7. Storage and feeding assembly (1) according to any one of claims 1 to 4, comprising a spacer (4) suitable for being releasably positioned between the upper end (23) of the drum (2) and the lid (5), wherein said spacer (4) comprises a spacer body (40) defining a spacer housing (400) delimited by an annular side wall (42) so as to act as an extension for the drum (2).

8. Storage and feeding assembly (1) according to claim 7, further comprising at least one wire unwinding accessory (100) positioned at least partially in the spacer housing (400).

9. Storage and feeding assembly (1) according to claim 7 or 8, comprising first coupling means (15a) for releasably fastening the spacer (4) to the drum (2), wherein said first coupling means (15a) comprise a first releasable clamping ring (16a) which couples adjacent end portions of the drum (2) and the annular side wall (42), and comprising second coupling means (15b) for releasably fastening the lid (5) to the spacer (4), wherein said second coupling means comprise a second releasable clamping ring (16b) which couples adjacent end portions of the annular side wall (42) and the lid (5).

## Patentansprüche

1. Vorrats- und Zuführanordnung (1) für einen Draht (10), der zu einer Vorrichtung zuzuführen ist, beispielsweise ein Schweissdraht, der zu einer Schweissbrenner zuzuführen ist, umfassend:
- eine Trommel (2), die geeignet ist, einen Draht (10), der in Windungen (10') aufgewickelt wird, zu speichern, wobei sich die Trommel (2) um eine Trommelachse (Y-Y) zwischen einer Auflagebasis (21) und einem offenen oberen Ende (23) erstreckt;
- eine Drahthandhabungsvorrichtung (3), die geeignet ist, den Draht (10) aus der Trommel (2) herauszunehmen, um ihn der Vorrichtung zuzuführen;
- einen Deckel (5), der oberhalb der Trommel (2) angeordnet ist und eine obere Deckelwand (50) umfasst, in der ein Austrittsdurchgang (5') für den Draht (10) ausgebildet ist, und eine Deckelseitenwand (55), wobei die obere Deckelwand (50) und die Deckelseitenwand (55) ein Deckelvolumen (500) definieren,
wobei sich die Handhabungsvorrichtung (3) in dem Deckelvolumen (500) im Wesentlichen koaxial zu der Trommelachse (Y-Y) erstreckt, und wobei die Deckelseitenwand (55) mindestens teilweise aus einem transparenten Material hergestellt wird, so dass eine visuelle Inspektion der Handhabungsvorrichtung (3) durch die Deckelseitenwand (55) ermöglicht wird,
wobei die Drahthandhabungsvorrichtung (3) eine Gleichrichtergruppe (50) und eine Drahtzuggruppe (60) umfasst,
wobei die Gleichrichtergruppe (50) mindestens zwei Rollengleichrichtereinheiten (52, 52a) umfasst, die entlang der Zuführrichtung des Drahtes (10) in Reihe zueinander angeordnet sind, und
wobei die Drahtzuggruppe (60) entweder zwei einander gegenüberliegende Antriebsriemen (12, 12') umfasst, die zwei jeweilige gerade Riemensegmente (14) bilden, die einander zugewandt sind, um den Draht (10), der aus der Trommel (2) austritt dazwischen aufzunehmen und zu bewegen, oder
eine Mehrzahl von motorisierten Drahtzugrollen umfasst, die einander gegenüberliegen, um den Draht (10) der aus der Trommel (2) austritt dazwischen aufzunehmen und zu bewegen.

2. Vorrats- und Zuführanordnung (1) nach Anspruch 1, wobei die Drahthandhabungsvorrichtung (3) fest an der oberen Deckelwand (50) innerhalb des Deckelvolumens (500) befestigt wird.

3. Vorrats- und Zuführanordnung (1) nach Anspruch 1 oder 2, wobei die Drahthandhabungsvorrichtung (3) eine Trägerbasis (30) umfasst, die geeignet ist, in tragenden Eingriff zu treten und an der oberen Deckelwand (50) befestigt zu werden.

4. Vorrats- und Zuführanordnung (1) nach einem der vorhergehenden Ansprüche, wobei mindestens eine Deckelöffnung (55') in der Deckelseitenwand (55) erhalten wird, um Zugang zu dem Deckelvolumen (500) zu erlauben.

5. Vorrats- und Zuführanordnung (1) nach einem der vorhergehenden Ansprüche, wobei der Deckel (5) lösbar an dem oberen Ende (23) der Trommel (2) positioniert ist.

6. Vorrats- und Zuführanordnung (1) nach Anspruch 5, umfassend erste Kupplungsmittel (15) zum lösbaren Befestigen des Deckels (5) an der Trommel (2), wobei die ersten Kupplungsmittel (15) einen ersten lösbaren Spannring (16) umfassen, der benachbarte Endabschnitte der Trommel (2) und der Seitenwand (55) koppelt.

7. Vorrats- und Zuführanordnung (1) nach einem der Ansprüche 1 bis 4, umfassend einen Abstandshalter (4), der geeignet ist, lösbar zwischen dem oberen Ende (23) der Trommel (2) und dem Deckel (5) positioniert zu werden, wobei der Abstandshalter (4) einen Abstandshalterkörper (40) umfasst, der einen Abstandshalterhohlraum (400) definiert, der durch eine ringförmige Seitenwand (42) begrenzt wird, so dass er als eine Erweiterung der Trommel (2) wirkt.

8. Vorrats- und Zuführanordnung (1) nach Anspruch 7, ferner umfassend mindestens ein Drahtabwicklungszubehör (100), das mindestens teilweise in dem Abstandshalterhohlraum (400) positioniert ist.

9. Vorrats- und Zuführanordnung (1) nach Anspruch 7 oder 8, umfassend erste Kupplungsmittel (15a) zum lösbaren Befestigen des Abstandshalters (4) an der Trommel (2), wobei die ersten Kupplungsmittel (15a) einen ersten lösbaren Spannring (16a) umfassen, der benachbarte Endabschnitte der Trommel (2) und der ringförmigen Seitenwand (42) koppelt, und umfassend zweite Kupplungsmittel (15b) zum lösbaren Befestigen des Deckels (5) an dem Abstandshalter(4), wobei die zweiten Kupplungsmittel einen zweiten lösbaren Spannring (16b) umfassen, der benachbarte Endabschnitte der ringförmigen Seitenwand (42) und des Deckels (5) koppelt.

## Revendications

1. Un ensemble de stockage et d'alimentation (1) pour un fil (10) destiné à être alimenté vers un appareil, par exemple un fil de soudage destiné à être alimenté vers une torche de soudage, comprenant :
- un tambour (2) adapté à stocker un fil (10) enroulé en bobines (10'), le tambour (2) s'étendant autour d'un axe de tambour (Y-Y) entre une base d'appui (21) et une extrémité supérieure ouverte (23) ;
- un dispositif de manipulation du fil (3) adapté à extraire le fil (10) du tambour (2) pour l'alimenter vers l'appareil ;
- un couvercle (5) placé au-dessus du tambour (2) comprenant une paroi supérieure de couvercle (50) dans laquelle est obtenu un passage de sortie (5') pour le fil (10) et une paroi latérale de couvercle (55), dans lequel ladite paroi supérieure de couvercle (50) et ladite paroi latérale de couvercle (55) définissent un volume de couvercle (500),
dans lequel le dispositif de manipulation (3) s'étend dans le volume de couvercle (500) sensiblement coaxialement à l'axe du tambour (Y-Y), et dans lequel la paroi latérale de couvercle (55) est réalisée au moins partiellement en un matériau transparent de manière à permettre une inspection visuelle du dispositif de manipulation (3) à travers ladite paroi latérale de couvercle (55),
dans lequel le dispositif de manipulation du fil (3) comprend un groupe redresseur (50) et un groupe de traction du fil (60),
dans lequel le groupe redresseur (50) comprend au moins deux unités redresseuses à rouleaux (52, 52a) disposées en série l'une avec l'autre le long de la direction d'alimentation du fil (10), et
dans lequel le groupe de traction du fil (60) comprend soit deux courroies motrices opposées (12, 12') formant deux segments de courroie rectilignes respectifs (14) se faisant face de manière à recevoir et déplacer le fil (10) sortant du tambour (2) entre celles-ci, soit une pluralité de rouleaux de traction du fil motorisés se faisant face de manière à recevoir et déplacer le fil (10) sortant du tambour (2) entre ceux-ci.

2. Ensemble de stockage et d'alimentation (1) selon la revendication 1, dans lequel le dispositif de manipulation (3) est fixé de manière ferme à la paroi supérieure de couvercle (50) à l'intérieur du volume de couvercle (500).

3. Ensemble de stockage et d'alimentation (1) selon la revendication 1 ou 2, dans lequel le dispositif de manipulation du fil (3) comprend une base de support (30) adaptée à venir en engagement de support et à être fixée à la paroi supérieure de couvercle (50).

4. Ensemble de stockage et d'alimentation (1) selon l'une quelconque des revendications précédentes, dans lequel au moins une ouverture de couvercle (55') est obtenue dans la paroi latérale de couvercle (55) pour accéder au volume de couvercle (500).

5. Ensemble de stockage et d'alimentation (1) selon l'une quelconque des revendications précédentes, dans lequel le couvercle (5) est positionné de manière amovible à l'extrémité supérieure (23) du tambour (2).

6. Ensemble de stockage et d'alimentation (1) selon la revendication 5, comprenant des premiers moyens de couplage (15) pour fixer de manière amovible le couvercle (5) au tambour (2), dans lequel lesdits premiers moyens de couplage (15) comprennent un premier anneau de serrage amovible (16) qui couple des portions d'extrémité adjacentes du tambour (2) et de la paroi latérale (55).

7. Ensemble de stockage et d'alimentation (1) selon l'une quelconque des revendications 1 à 4, comprenant un entretoise (4) adaptée à être positionnée de manière amovible entre l'extrémité supérieure (23) du tambour (2) et le couvercle (5), dans lequel ladite entretoise (4) comprend un corps d'entretoise (40) définissant un logement d'entretoise (400) délimité par une paroi latérale annulaire (42) de manière à agir comme une extension du tambour (2).

8. Ensemble de stockage et d'alimentation (1) selon la revendication 7, comprenant en outre au moins un accessoire de déroulement du fil (100) positionné au moins partiellement dans le logement d'entretoise (400).

9. Ensemble de stockage et d'alimentation (1) selon la revendication 7 ou 8, comprenant des premiers moyens de couplage (15a) pour fixer de manière amovible l'entretoise (4) au tambour (2), dans lequel lesdits premiers moyens de couplage (15a) comprennent un premier anneau de serrage amovible (16a) qui couple des portions d'extrémité adjacentes du tambour (2) et de la paroi latérale annulaire (42), et comprenant des seconds moyens de couplage (15b) pour fixer de manière amovible le couvercle (5) à l'entretoise (4), dans lequel lesdits seconds moyens de couplage comprennent un second anneau de serrage amovible (16b) qui couple des portions d'extrémité adjacentes de la paroi latérale annulaire (42) et du couvercle (5).
